# DEMANDE DE BREVET EUROPEEN

(11) **EP 0 834 728 A1**
(43) Date de publication de la demande: **08.04.1998**
(21) Numéro de dépôt: 97450022.5
(22) Date de dépôt: 25.09.1997
(51) Int. Cl.: G01M 3/18

(54) **Dispositif de détection de fuite de liquide, notamment d'eau dans un réseau domestique ou industriel**

(30) Priorité: 01.10.1996 FR 9612206
(71) Demandeur: Etablissements Lafitte Société Anonyme, 40230 Saint Vincent de Tyrosse (FR)
(72) Inventeur: Lafitte, Christian, 40230 Saint Vincent de Tyrosse (FR)
(74) Mandataire: Thébault, Jean-Louis

(57) **Abrégé**

- L'invention concerne un dispositif de détection de fuite de liquide, notamment d'eau dans un réseau domestique ou industriel.
- Le dispositif est caractérisé en ce qu'il est constitué d'un conduit cylindrique calibré (4) interposé dans une canalisation (2, 3) d'acheminement du liquide, à l'amont de la partie du réseau (3) à surveiller, ledit conduit (4) étant disposé sensiblement verticalement, d'une bille (15) apte à se déplacer librement sous la poussée du liquide dans le conduit (4) entre une première position à l'extrémité inférieure du conduit en l'absence de toute circulation de liquide, une deuxième position (15') située en aval de la première et au delà d'un passage (16, 16a) faisant communiquer le conduit avec ladite canalisation d'acheminement (3), immédiatement en aval dudit conduit, ledit passage étant calibré à un débit pré-déterminé très faible et une troisième position (15"') située en aval de la deuxième (15') et dégageant une section de passage (14) pour le fluide notablement plus importante que celle dudit passage calibré (16, 16a), et des moyens (18, 19, 20 ; 21 à 34) de détection et signalisation du passage de la bille (15) dans au moins les deuxième (15') et troisième (15") positions respectivement.
- Application notamment à la détection de fuites de type goutte à goutte.

## Description

La présente invention se rapporte à un détecteur à très haute sensibilité d'écoulement de liquides, en particulier d'eau par exemple dans un réseau de distribution domestique ou industriel et vise tout spécialement la détection d'écoulement involontaires et non contrôlés tels que des fuites.

Les dispositifs actuels de détection de ces types d'écoulement dont on sait les dégâts qu'ils peuvent occasionner si l'on tarde à intervenir, ne sont pas capables de signaler des fuites sous forme de goutte à goutte.

Il serait pourtant fort utile de disposer de dispositifs capables d'une telle détection car c'est souvent ce type de fuite qui se produit par exemple chez l'usager entre le compteur d'eau et des appareils sanitaires, des robinets de puisage, des électrovannes, des robinets à flotteur, des alimentations automatiques, des soupapes de sécurité, des appareils tels que lave-vaisselle, lave-linge, chauffe-eau, etc..., ou à l'intérieur de ces appareils ou équipements.

La présente invention a précisément pour but de proposer des moyens propres à détecter de très faibles écoulements de liquide dans un réseau, trahissant quasi inévitablement l'existence d'une fuite de type goutte à goutte quelque part dans le circuit de circulation du fluide dudit réseau.

A cet effet, l'invention a pour objet un dispositif de détection de fuite de liquide, notamment de l'eau, dans un réseau domestique ou industriel, caractérisé en ce qu'il est constitué ;
- d'un conduit cylindrique calibré interposé dans une canalisation d'acheminement du liquide, à l'amont de la partie du réseau à surveiller, ledit conduit étant disposé sensiblement verticalement,
- d'une bille de diamètre très légèrement inférieur à celui dudit conduit et apte à se déplacer librement sous la poussée du liquide dans le conduit entre une première position, dite de repos ou retenue, à l'extrémité inférieure du conduit en l'absence de toute circulation de liquide dans ledit réseau, une deuxième position située en aval de la première et au delà d'un passage faisant communiquer le conduit avec ladite canalisation d'acheminement, immédiatement en aval dudit conduit, ledit passage étant calibré à un débit prédéterminé très faible et une troisième position située en aval de la deuxième et dégageant une section de passage pour le fluide notablement plus importante que celle dudit passage calibré,
- et des moyens de détection et signalisation du passage de la bille dans au moins les deuxième et troisième positions respectivement.

Un tel dispositif est susceptible de détecter et signaler non seulement une fuite du type goutte à goutte dans un réseau ainsi équipé, mais également un régime d'écoulement normal dans le réseau correspondant à un usage normal d'au moins l'un des appareils et/ou équipements alimentés par ce réseau.

En variante, le dispositif peut être muni de moyens de détection/signalisation de la position de repos de la bille (absence totale d'écoulement) et des moyens détectant et signalant plusieurs positions de la bille correspondant à différent régimes d'écoulement résultant par exemple de la mise en service d'un ou plusieurs appareils ou équipements.

En l'absence totale d'écoulement (non utilisation du réseau) la bille repose par gravité dans ladite première position à l'intérieur du conduit calibré, en amont dudit passage calibré.

Si, à la suite d'une fuite de type goutte à goutte, un appel d'eau se crée dans le réseau et donc en aval de la bille, le flux de liquide appelé soulève la bille et la déplace dans le conduit jusqu'à la deuxième position découvrant le passage calibré dans lequel le liquide s'engage et passe ainsi dans la canalisation du réseau.

Le passage étant calibré pour délivrer un débit correspondant à des fuites de type goutte à goutte, l'élévation de la bille à l'intérieur du conduit calibré se stabilise au dessus du débouché du passage calibré dans ledit conduit.

Les moyens de détection détectent le passage de la bille dans cette position, c'est à dire ladite deuxième position, et génèrent un signal d'information à l'intention de l'usager ou d'une personne chargée de la surveillance, ceux-ci pouvant être à distance du local où se trouve le réseau sous contrôle, et pouvant alors faire le nécessaire pour stopper la fuite, par exemple agir sur un robinet d'arrêt à l'amont du réseau.

Suivant une variante plus sophistiquée, ledit signal de détection, non seulement signale la présence d'une fuite, mais commande automatiquement l'isolement de la partie de réseau concernée.

Suivant encore une autre variante, le dispositif peut comporter des moyens de détection de la bille dans une quatrième position, au dessus de la troisième position dans le conduit calibré et correspondant à un dégagement plus important du passage d'alimentation du réseau, c'est à dire à un débit plus important, par exemple le débit maximal possible.

D'autres caractéristiques et avantages ressortiront de la description qui va suivre d'un mode de mise en oeuvre du dispositif de l'invention, description donnée à titre d'exemple uniquement et en regard des dessins annexés sur lesquels :
- Figure 1 est une vue schématique en coupe verticale axiale d'un détecteur selon l'invention, interposé dans un réseau de distribution d'eau ;
- Figure 2 est une vue de droite agrandie du corps du détecteur de la figure 1 ;
- Figure 3 est une vue de dessous dudit corps ;
- Figure 4 est un schéma de la partie émission des moyens de détection signalisation des niveaux de débit, et
- Figure 5 est un schéma de la partie réception.

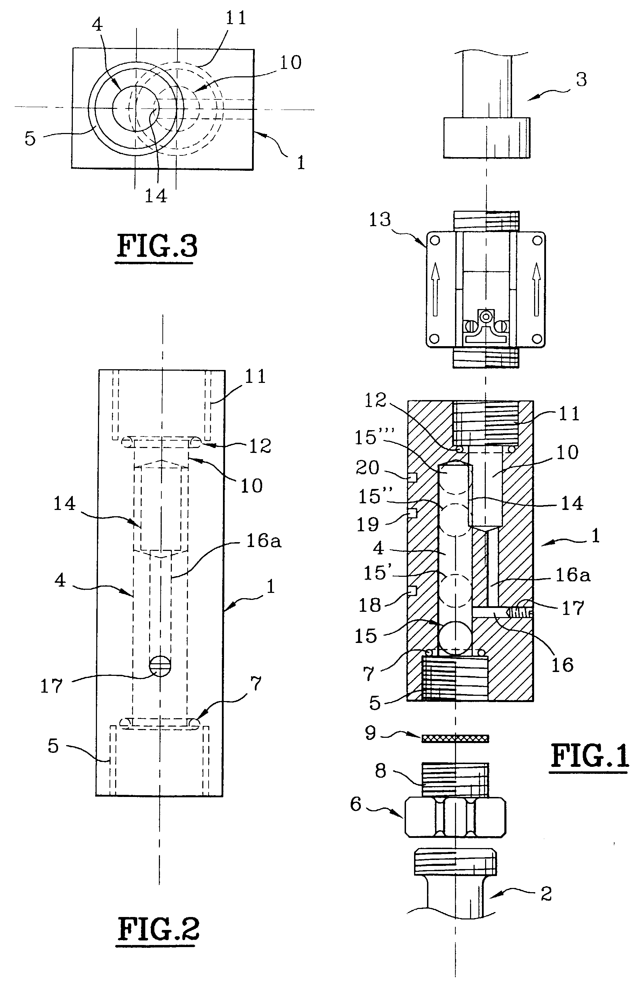

Sur la figure 1, on a représenté schématiquement en coupe verticale un dispositif détecteur 1 selon l'invention, constitué d'un corps parallélépipédique réalisé par exemple en un matériau non magnétique et interposé dans un réseau par exemple de distribution d'eau domestique, entre une canalisation d'alimentation 2 et une canalisation 3 de distribution de l'eau à un ou plusieurs appareils et/ou équipements tels que lave-vaisselle, lave-linge, chauffe-eau, appareils sanitaires, robinets de puisage, alimentation automatique, etc...

Le corps de détecteur 1 est percé longitudinalement d'un premier trou borgne 4 définissant un conduit cylindrique calibré, débouchant dans un avant-trou 5 plus large, taraudé afin de recevoir un raccord 6 de liaison à un embout fileté de la canalisation d'alimentation 2.

Dans le fond de l'avant-trou 5 est reçu un joint d'étanchéité toroïdal 7 pressé par l'extrémité filetée 8 du raccord 6, un tamis 9 en forme de disque, par exemple en acier inoxydable, étant interposé entre le raccord 6 et le joint 7.

L'avant-trou 5 se trouve sur la face inférieure du corps 1, l'axe du conduit 4 étant, en position de fonctionnement du détecteur, sensiblement vertical.

le corps 1 est percé parallèlement au conduit 4 et avec un certain déport latéral, d'un second trou borgne 10 débouchant sur la face supérieure du corps 1 par un avant-trou 11 plus large, également muni sur son fond d'un joint d'étanchéité toroïdal 12 et taraudé pour recevoir une électrovanne 13 interposée entre le détecteur et la canalisation de départ 3 du réseau.

Les deux trous borgnes 4, 10 se recouvrent mutuellement partiellement, sur une certaine longueur en sorte de délimiter entre eux une lumière de passage 14 faisant communiquer les avant-trous 5, 11, via les trous 4, 10, c'est à dire les canalisations 2 et 3.

Les trous 4, 10 ont par exemple le même diamètre de 14 mm.

Dans le conduit calibré 4 peut se déplacer librement une bille 15, par exemple en matériau magnétique tel que de l'acier inoxydable, dont le diamètre est juste inférieur à celui du conduit 4 pour permettre ledit libre coulissement.

En position d'interruption totale de circulation d'eau dans le circuit 2-1-3, la bille 15 repose par gravité sur le filtre 9, c'est à dire au fond du conduit 4. Cette position, dite première position, de repos ou retenue, est illustrée en 15 sur la figure 1.

Dans cette première position, la bille 15 se trouve légèrement en dessous du débouché d'un passage calibré 16, par exemple de diamètre 3 mm, débouchant à son autre extrémité sur une face latérale du corps 1. Le passage 16 est obturé partiellement par une vis 17. La partie non obturée communique avec un autre passage 16a de même diamètre percé dans le fond du trou 10.

Le passage 16-16a fait communiquer à la manière d'un by-pass les trous 4-10 lorsque la bille 15 se trouve dans le conduit 4 entre l'orifice du passage 16 et la lumière 14.

Latéralement au corps 1 sont disposés des capteurs de type magnétique ou inductif, en regard du conduit calibré 4 et à différentes hauteurs.

En 18 est fixé un premier capteur qui se trouve légèrement au dessus du niveau du débouché du passage 16, c'est à dire en regard de la deuxième position, dite de détection de fuite goutte à goutte, de la bille (15').

En regard de la lumière 14 sont disposés, en partie basse, un deuxième capteur 19 et, en partie haute, un troisième capteur 20, correspondant respectivement à une troisième position (bille 15") et à une quatrième position (bille 15"').

le fonctionnement du dispositif décrit ci-dessus est le suivant.

En situation d'interruption totale de circulation d'eau dans le circuit 2-1-3, la bille est en 15 (première position) et repose sur le disque filtrant 9.

Si une fuite du type goutte à goutte survient en aval du dispositif 1, alors qu'aucun appareil ou équipement du réseau (3) n'est en service, un appel d'eau se crée qui va entraîner le déplacement dans le conduit 4 de la bille, c'est à dire son décollement du filtre 9 et son ascension dans le conduit 4. Cette ascension se poursuit jusqu'à ce que la bille vienne en position 15' de dégagement du débouché du passage calibré 16. A ce moment, l'eau s'engouffre dans le passage 16, 16a, puis le trou 10 et la canalisation 3 pour alimenter la fuite.

Du fait qu'il s'agit d'une fuite engendrant un très faible débit de circulation d'eau, dès que la bille en montant a dégagé l'orifice du passage 16, il s'établit rapidement une équi-pression de part et d'autre de la bille dans le conduit 4, laquelle stoppe l'élévation de la bille dans le conduit en sorte qu'elle demeure substantiellement en deçà de la position 15" tout le temps de l'existence de la seule fuite goutte à goutte.

Le capteur 18 détecte la présence de la bille 15' et le signale.

S'il n'existe aucune fuite et qu'un appareil du réseau 3 est mis en service, un appel d'eau beaucoup plus important sera créé dans le conduit 4 au dessus de la bille 15. Cette dernière va être poussée vers le haut par l'eau, passer en deuxième position (15') et continuer son ascension car le passage 16, 16a ne génère pas un débit suffisant pour rétablir une équi-pression de part et d'autre de la bille dans le conduit 4.

Le mouvement d'ascension de la bille se poursuit jusqu'en troisième position (15") dans laquelle la bille dégage un orifice de passage complémentaire pour l'eau, à savoir une fraction de la lumière 14.

La conjonction des deux passages génère alors un débit suffisant pour rétablir l'équi-pression de chaque côté de la bille, stoppant ainsi son ascension au niveau de la troisième position. Cette dernière est alors détectée et signalée par le capteur 19.

Dans le cas où le débit sollicité est très important, par exemple maximal, résultant de la mise en service d'un appareil ou équipement à gros débit ou de plusieurs appareils ou équipements utilisés simultanément, la bille poursuit son ascension jusqu'en quatrième position (15"') dégageant une section de passage maximale. Cette quatrième position est détectée et signalée par le capteur 20.

Enfin, dès que toute circulation d'eau sera interrompue, la bille revient du fait de son poids en première position (15).

Il est à noter que cette première position peut être détectée et signalée à partir de la simple absence de sollicitation des trois capteurs 18, 19 et 20.

Il est également à noter que dans le cas où une fuite survient en cours d'utilisation d'un appareil ou équipement du réseau (3), le dispositif ne sera en mesure de détecter cette fuite qu'à l'arrêt dudit appareil ou équipement. Ce n'est qu'à ce moment que le capteur 18 sera sollicité.

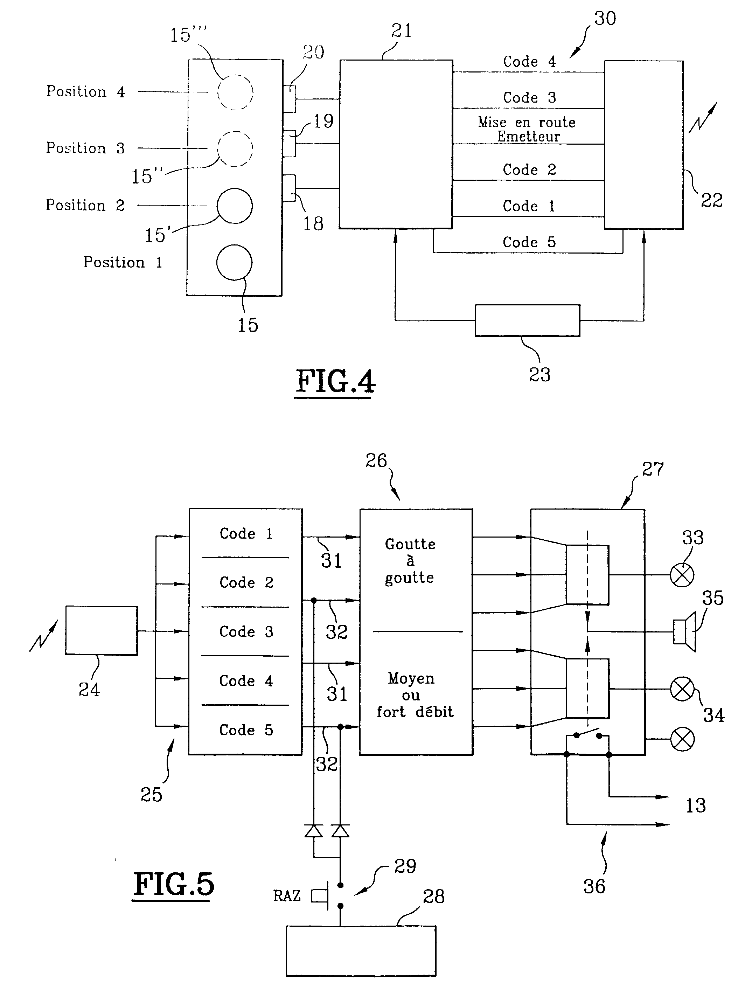

Les figures 4 et 5 illustrent un mode de mise en oeuvre d'un système de télésurveillance du réseau (3) à partir des capteurs 18, 19, 20.

la figure 4 se rapporte à la partie émission du système, laquelle comprend une électronique 21 de traitement et de codage reliée aux capteurs 18, 19, 20, un émetteur hertzien 22, une alimentation 23.

La figure 5 se rapporte à la partie réception, laquelle comprend un récepteur accordé 24, relié à une série de décodeurs 25. Deux types de compteurs 26, goutte à goutte et moyen ou fort débit, sont reliés aux décodeurs 25 et eux-mêmes connectés à un bloc 27 de signalisation lumineuse et sonore. L'ensemble est alimenté à partir d'une alimentation 28 munie d'un bouton 29 de remise à zéro.

L'électronique 21 génère à partir des informations fournies par les capteurs 18, 19, 20 divers signaux codés acheminés par des liaisons 30 à l'émetteur 22.

A la réception, les signaux sont décodés en 25. Le système signale le début et la fin de chaque état, à savoir la présence d'une fuite goutte à goutte et la présence d'un écoulement moyen ou fort, ces deux situation n'étant pas différenciées dans l'exemple illustré.

Pour chaque état (fuite, ou débit normal), on effectue un comptage (26) dont la mise en route (31) et l'arrêt (32) sont commandés à partir des codes 1 à 4.

Le bloc signalétique 27 affiche un signal lumineux 33 de fuite et 34 de débit moyen ou fort, et actionne un bruiteur 35.

Différentes variantes dans le traitement et la signalisation des signaux sont possibles, par exemple une temporisation déclenchée à la détection d'une fuite entraînant au bout d'une temps donné et en cas de continuation de la fuite, une signalisation plus puissante et/ou une intervention par un circuit 36 par exemple sur l'électrovanne d'arrêt 13 du réseau 3 afin d'isoler ce dernier.

Le système récepteur (figure 5) peut se trouver à distance et permet d'effectuer dans un poste de contrôle placé à l'endroit approprié une télésurveillance de tout ou partie d'un réseau ou de plusieurs réseaux, d'eau ou de tout autre liquide, domestiques ou industriels.

Enfin, l'invention n'est évidemment pas limitée au mode de réalisation représenté et décrit ci-dessus, mais en couvre au contraire toutes les variantes notamment en ce qui concerne les formes et dimensions des conduits 4, 10, des passages 16, 16a, de la lumière 14, en ce qui concerne la nature et le nombre des capteurs en regard de chaque position susceptible d'être occupée par la bille 15 en correspondance avec différents débits de liquide en circulation, ou en ce qui concerne les actions de signalisation et/ou commande mises en oeuvre à partir des informations fournies par lesdits capteurs.

## Revendications

1. Dispositif de détection de fuite de liquide, notamment de l'eau, dans un réseau domestique ou industriel (3), caractérisé en ce qu'il est constitué ;
- d'un conduit cylindrique calibré (4) interposé dans une canalisation (2, 3) d'acheminement du liquide, à l'amont de la partie du réseau (3) à surveiller, ledit conduit (4) étant disposé sensiblement verticalement,
- d'une bille (15) de diamètre très légèrement inférieur à celui dudit conduit et apte à se déplacer librement sous la poussée du liquide dans le conduit (4) entre une première position, dite de repos ou retenue, à l'extrémité inférieure du conduit en l'absence de toute circulation de liquide dans ledit réseau, une deuxième position (15') située en aval de la première et au delà d'un passage (16, 16a) faisant communiquer le conduit avec ladite canalisation d'acheminement (3), immédiatement en aval dudit conduit, ledit passage étant calibré à un débit prédéterminé très faible et une troisième position (15"') située en aval de la deuxième (15') et dégageant une section de passage (14) pour le fluide notablement plus importante que celle dudit passage calibré (16, 16a),
- et des moyens (18, 19, 20 ; 21 à 34) de détection et signalisation du passage de la bille (15) dans au moins les deuxième (15') et troisième (15") positions respectivement.

2. Dispositif suivant la revendication 1, caractérisé en ce qu'il comporte en outre des moyens de détection/signalisation de ladite position de repos de la bille (15).

3. Dispositif suivant la revendication 1 ou 2, caractérisé en ce qu'il comporte des moyens(19, 20) de détection et signalisation de plusieurs positions (15", 15"') de la bille (15) correspondant à différents régimes d'écoulement.

4. Dispositif suivant l'une des revendications 1 à 3, caractérisé en ce que lesdits moyens de détection/signalisation (18 à 20 ; 21 à 34) comportent en outre des moyens (36) commandant automatiquement l'isolement de la partie du réseau (3) concernée.

5. Dispositif suivant l'une des revendications 1 à 4, caractérisé en ce que les moyens de détection/signalisation comprenent des moyens (21 à 23) reliés auxdits capteurs (18 à 20) pour coder les informations fournies par les capteurs et les émettre par voie hertzienne (22) et des moyens de réception à distance comprenant un récepteur (24), des moyens (25) de décodage des signaux et des moyens (27, 33, 34, 35, 36) de signalisation/intervention.

6. Dispositif suivant la revendication 5, caractérisé en ce qu'il comporte, en outre, des moyens (26) de comptage des débits respectivement de fuite et d'écoulement normal.

7. Dispositif suivant l'une des revendications 1 à 6, caractérisé en ce que ledit conduit calibré (4) est un trou borgne ménagé dans un corps (1) muni d'un second trou borgne (10) parallèle au premier (4), déporté latéralement et débouchant à l'opposé du conduit (4) sur le corps (1), les deux trous borgnes (4, 10) se recouvrant mutuellement, partiellement sur une partie de leur longueur en sorte de délimiter entre eux une lumière définissant ladite section de passage (14) et faisant communiquer les canalisations (2, 3) via lesdits trous (4, 10).

8. Dispositif suivant la revendication 7, caractérisé en ce que les deux trous borgnes (4, 10) sont reliés entre eux par ledit passage calibré (16, 16a).

9. Dispositif suivant l'une des revendications 1 à 8, caractérisé en ce que la bille (15) est retenue en position de repos par un filtre (9).

10. Dispositif suivant l'une des revendications 7 à 9, caractérisé en ce que le corps (1) est en matériau non magnétique, la bille (15) est en matériau magnétique et les capteurs (18 à 20) sont des capteurs magnétiques ou inductifs.
